# EUROPÄISCHE PATENTSCHRIFT

(11) **EP 1 506 557 B1**
(45) Veröffentlichungstag und Bekanntmachung des Hinweises auf die Patenterteilung: **23.08.2006**
(21) Anmeldenummer: 03752708.2
(22) Anmeldetag: 21.05.2003
(51) Int. Cl.: H01G 9/00

(54) **CHIPKONDENSATOR UND VERFAHREN ZU DESSEN HERSTELLUNG**
CHIP CAPACITOR AND METHOD FOR THE PRODUCTION THEREOF
CONDENSATEUR A PUCE ET SON PROCEDE DE PRODUCTION

(30) Priorität: 21.05.2002 DE 10222405
(43) Veröffentlichungstag der Anmeldung: 16.02.2005
(73) Patentinhaber: EPCOS AG, 81669 München (DE)
(72) Erfinder: HEUSMANN, Hans, 7000 Evora (PT); NUNES, Rui, 7000 Evora (PT)
(74) Vertreter: Epping - Hermann - Fischer
(86) Internationale Anmeldenummer: PCT/DE2003/001646
(87) Internationale Veröffentlichungsnummer: WO 2003/098647

(56) Entgegenhaltungen:
- EP-A- 1 143 465
- US-A- 3 686 535
- US-A- 3 781 976
- US-A- 4 097 916
- US-A- 4 282 645
- US-A- 4 581 479
- PATENT ABSTRACTS OF JAPAN vol. 013, no. 325 (E-792), 21. Juli 1989 (1989-07-21) & JP 01 091411 A (HITACHI CONDENSER CO LTD), 11. April 1989 (1989-04-11)

## Beschreibung

Die Erfindung betrifft einen Chipkondensator mit wenigstens zwei Kondensatorkörpern, die jeweils mit einem Anodenkontakt versehen sind. Ferner betrifft die Erfindung ein Verfahren zur Herstellung des Kondensators.

Es sind aus der Druckschrift US 3,686,535 Chipkondensatoren der eingangs genannten Art bekannt, bei denen wenigstens zwei Kondensatorkörper mit ihren Flachseiten an einem Kathodenkontakt befestigt sind.

Die bekannten Chipkondensatoren haben den Nachteil, daß für die Montage des Kondensator mit mehreren Kondensatorkörpern jeder Kondensatorkörper einzeln mittels einer sogenannten Pick-and-Place-Vorrichtung auf den Kathodenkontakt aufgesetzt wird. Anschließend wird jeder Kondensatorkörper einzeln mit einem Leadframe verbunden.

Diese Vorgehensweise für die Herstellung des Chipkondensators ist zeitaufwendig, da jeder Kondensatorkörper einzeln montiert werden muß.

Es ist Aufgabe der vorliegenden Erfindung, einen Chipkondensator anzugeben, der einfach und schnell herstellbar ist. Es ist ferner Aufgabe der vorliegenden Erfindung, ein Verfahren zur Herstellung des Chipkondensators anzugeben.

Diese Aufgaben werden gelöst durch einen Chipkondensator gemäß Patentanspruch 1 beziehungsweise durch ein Verfahren gemäß Patentanspruch 11. Weitere Ausgestaltungen der Erfindung sind den abhängigen Patentansprüchen zu entnehmen.

Es wird ein Chipkondensator angegeben mit wenigstens zwei Kondensatorkörpern, die jeweils mit einem Anodenkontakt versehen sind. Der Anodenkontakt ragt aus dem Inneren des Kontaktkörpers heraus. Ferner weist der Chipkondensator einen Kathodenkontakt auf. Die Kondensatorkörper sind übereinander gestapelt und auf dem Kathodenkörper montiert. Dabei ist wenigstens ein Kondensatorkörper mit einer breiten Seite versehen, die auf dem Kathodenkontakt montiert ist.

Durch die Montage wenigstens eines Kondensatorkörpers mit der Breitseite auf den Kathodenkontakt und durch das Übereinanderstapeln von Kondensatorkörpern ist es möglich, den Chipkondensator mittels eines Verfahrens herzustellen, welches die Herstellung einer Vielzahl von Chipkondensatoren zur gleichen Zeit erlaubt. Die Kondensatorkörper brauchen dann nämlich nicht mehr einzeln mit dem Kathodenkontakt verbunden werden, sondern es können eine Vielzahl von Kondensatorkörpern gleichzeitig mit einem Kathodenkontakt verbunden werden. Darüber hinaus ermöglicht die Anordnung von Anodenkontakt und Kathodenkontakt die Herstellung von Chipkondensatoren, die wenigstens zwei Kondensatorkörper enthalten, welche innerhalb des Chipkondensators parallel geschaltet werden können. Eine solche Parallelschaltung mehrerer Kondensatorkörper innerhalb des Chipkondensators hat den Vorteil, daß der Chipkondensator einen niedrigeren elektrischen Serienwiderstand aufweist.

Es wird ein Verfahren zur Herstellung eines Chipkondensators angegeben, wobei in einem ersten Schritt ein Systemträger bereitgestellt wird. Der Systemträger weist aneinandergereihte Kathodenkontakte auf. Gegenüber den Kathodenkontakten ist jeweils ein Anodenanschluß am Systemträger angeordnet. Ferner wird eine Vielzahl von Kondensatorkörpern bereitgestellt, die jeweils mit einem Anodenkontakt versehen sind. Jeder der Anodenkontakte ragt aus dem Kondensatorkörper heraus. Die Kondensatorkörper sind mittels der Anodenkontakte kammartig mit einem gemeinsamen Kondensatorträger verbunden. Es wird eine Vielzahl - wenigstens jedoch zwei - solcher Kondensatorträger bereitgestellt.

In einem weiteren Schritt werden der Systemträger und ein erster Kondensatorträger übereinandergelegt.

Es werden Kondensatorkörper am entsprechenden Kathodenkontakt befestigt. Es werden auch Anodenkontakte am entsprechenden Anodenanschluß des Systemträgers befestigt.

In einem weiteren Schritt wird der Systemträger und ein weiterer Kondensatorträger übereinandergelegt. Es werden Kondensatorkörper an Zusammenbauten aus einem Kondensatorkörper und einem Kathodenkontakt befestigt. Es werden ferner Anodenkontakte an entsprechenden Anodenanschlüssen des Systemträgers befestigt.

Das Verfahren hat den Vorteil, daß eine Vielzahl von Anodenkörpern gleichzeitig an Kathodenkontakten befestigt wird. Darüber hinaus hat das Verfahren den Vorteil, daß eine Vielzahl von Chipkondensatoren mit mehreren Kondensatorkörpern gleichzeitig herstellbar ist.

Die Befestigung des Kondensatorkörpers am Kathodenkontakt kann vorteilhafterweise mittels eines Leitklebers erfolgen. Ebenfalls kann ein Kondensatorkörper an einem weiteren Kondensatorkörper mittels Leitkleber befestigt sein. Der Leitkleber hat den Vorteil, daß er einfach zu verarbeiten ist und daß er neben der Haftung von zwei Teilen aneinander auch noch einen guten elektrischen Kontakt vermittelt.

Anodenkontakte können in Vertiefungen eines Anodenanschlusses angeordnet sein. Dadurch erreicht man den Vorteil, daß die Anodenkontakte örtlich fixiert sind, was den Zusammenbau des Chipkondensators erleichtert.

Die Vertiefungen können desweiteren vorteilhafterweise zu der dem Kathodenkontakt gegenüberliegenden Seite des jeweiligen Kontaktkörpers hin offen sein. Dadurch wird es erleichtert, den Kondensatorkörper von einer Montageoberseite her an der gewünschten Position, entweder auf dem Kathodenkontakt oder auf einem bereits im Chipkondensator vorhandenen Kondensatorkörper, zu positionieren und gleichzeitig den Anodenkontakt an seiner bestimmungsgemäßen Position am Anodenanschluß einzuführen.

In einer vorteilhaften Ausführungsform der Erfindung sind die Vertiefungen V-förmig aus einem Abschnitt eines Blechs herausgeschnitten. Der Abschnitt des Blechs ist senkrecht aus der Ebene des Blechs herausgebogen. Das Blech verläuft parallel zum Kathodenkontakt, während der Abschnitt mit den V-förmigen Ausschnitten zumindest annähernd senkrecht zum Kathodenkontakt verläuft. Indem der Kathodenkontakt und das Blech, das einen Teil des Anodenanschlusses bildet, zumindest annähernd parallel zueinander verlaufen, wird es ermöglicht, den Kathodenkontakt und den Anodenanschluß als Teile eines Systemträgers zu bilden, was die gleichzeitig die herstellbare Stückzahl von Chipkondensatoren maßgeblich steigert.

Die Kondensatorkörper können auf verschiedenen Seiten des Kathodenkontakts befestigt sein. Dadurch läßt sich ein symmetrischer Aufbau des Chipkondensators realisieren, der eine hohe mechanische Festigkeit aufweist.

In einer anderen Ausführungsform der Erfindung können die Kondensatorkörper übereinandergestapelt und auf ein und derselben Seite des Kathodenkontakts befestigt sein. Dadurch wird es ermöglicht, die Kondensatorkörper immer von einer Seite her auf den Kathodenkontakt zu montieren. Dies erleichtert die Montage, da ein Umdrehen des Kathodenkontakts nicht mehr erforderlich ist.

Um auch bei auf derselben Seite des Kathodenkontakts übereinanderliegenden Kondensatorkörpern ein sicheres Einführen des Anodenkontakts in die V-förmige Vertiefung zu erreichen, ist es vorteilhaft, wenn die auf derselben Seite des Kathodenkontakts angeordneten Anodenkontakte seitlich zueinander versetzt sind, so daß jeder Anodenkontakt freien Zugang in seine für ihn vorgesehene V-förmige Vertiefung hat.

Hingegen können die Anodenkontakte von zwei auf verschiedenen Seiten des Kathodenkontakts montierten Kondensatorkörpern senkrecht übereinanderliegend angeordnet sein, was die Designvielfalt des Kondensatorkörpers reduziert und somit die Herstellung vereinfacht und damit verbilligt.

In einer vorteilhaften Ausführungsform der Erfindung können die Anodenkontakte in den Vertiefungen mittels Laserschweißen befestigt sein. Das Befestigen der Anodenkontakte in Vertiefungen mittels Laserschweißen hat den Vorteil, daß durch das Laserschweißen gleichzeitig noch die Trennung des Kondensatorkörpers vom Kondensatorträger bewerkstelligt werden kann, wodurch die Vereinzelung gleichzeitig mit erfolgt.

Es ist demnach ein Verfahren vorteilhaft, wobei die Befestigung der Kondensatorkörper des weiteren Kondensatorträgers jeweils auf dem Kondensatorkörper des ersten Kondensatorträgers erfolgt. Daraus resultiert ein Chipkondensator mit übereinandergestapelten Kondensatorkörpern, die nur auf einer Seite des Kathodenkontakts befestigt sind.

Im folgenden wird die Erfindung anhand von Ausführungsbeispielen und den dazugehörigen Figuren näher erläutert.
- Figur 1: zeigt beispielhaft einen Chipkondensator während der Herstellung in einer perspektivischen Seitenansicht.
- Figur 2: zeigt beispielhaft einen weiteren erfindungsgemäßen Chipkondensator in einer perspektivischen Seitenansicht.
- Figur 3: zeigt beispielhaft einen weiteren erfindungsgemäßen Chipkondensator in einer perspektivischen Seitenansicht.
- Figur 4: zeigt einen Ausschnitt eines Systemträgers, wie er zur Herstellung des erfindungsgemäßen Chipkondensators beziehungsweise zur Verwendung im erfindungsgemäßen Verfahren verwendet werden kann.
- Figur 5: zeigt beispielhaft ein erfindungsgemäßes Verfahren zur Herstellung eines Chipkondensators.
- Figur 6: zeigt beispielhaft einen unbestückten Systemträger, geeignet zur Durchführung des Herstellungsverfahrens in Draufsicht.
- Figur 7: zeigt den Systemträger aus Figur 6 in bestücktem Zustand.

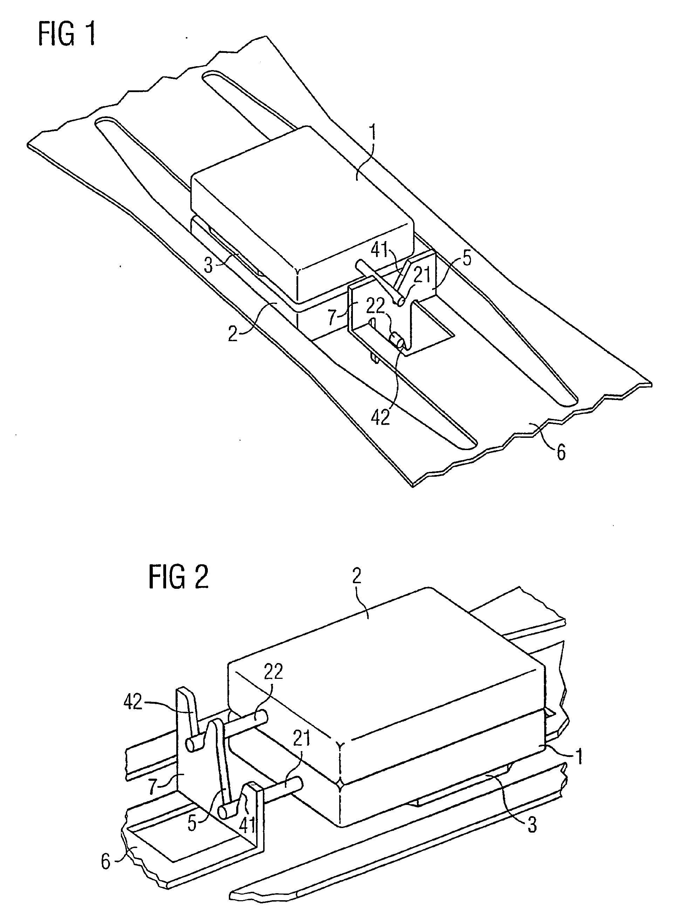

Figur 1 zeigt einen Chipkondensator mit zwei Kondensatorkörpern 1, 2. Die Kondensatorkörper 1, 2 haben die Form von Quadern. Die breiten Seiten der Kondensatorkörper 1, 2, sind auf der Oberseite beziehungsweise der Unterseite eines blechförmigen Kathodenkontakts 3 mittels eines Leitklebers befestigt.

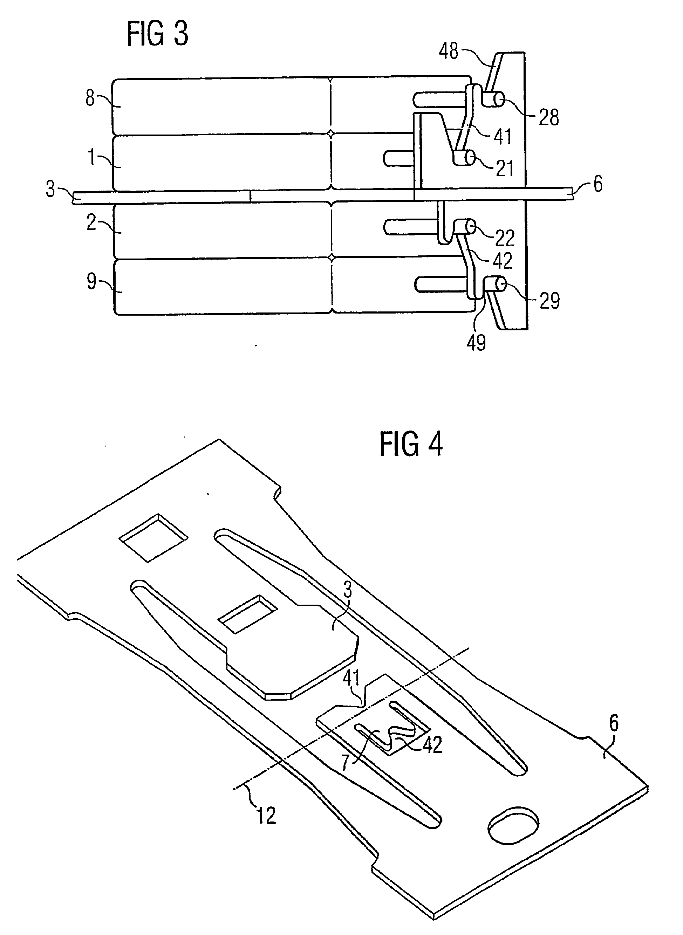

Aus dem Innern der Kondensatorkörper 1, 2 sind Anodenkontakte 21, 22 herausgeführt. Die Anodenkontakte 21, 22 sind in V-förmigen Vertiefungen 41, 42 angeordnet. Sie sind dort durch Laserschweißen befestigt. Die Vertiefungen 41, 42 sind aus einem Abschnitt 7 eines Blechs 6 herausgeschnitten. Die Vertiefung 41 öffnet sich dabei zur Oberseite des Kathodenkontakts 3 während sich die Vertiefung 42 zur Unterseite des Kathodenkontakts 3 hin öffnet. Dadurch können die Anodenkontakte 21, 22 der Kondensatorkörper 1, 2 leicht in die Vertiefungen 41, 42 eingelegt werden und so auf dem Kathodenkontakt 3 von der Oberseite beziehungsweise von der Unterseite her montiert werden. Der die Vertiefungen 41, 42 tragende Abschnitt 7 des Bleches 6 ist um ca. 90° gegenüber der Montageebene gekippt. Diese Kippung erreicht man durch Biegen eines Blechs 6, wie es in Figur 4 als Teil eines Systemträgers dargestellt ist. Die V-förmigen Vertiefungen 41, 42 haben darüber hinaus den Vorteil, daß sie zur Justierung der Anodenkontakte 21, 22 verwendet werden können.

In Figur 1 sind die Kondensatorkörper 1, 2 auf verschiedenen Seiten des flächig gebildeten Kathodenkontaktes 3 befestigt.

Gemäß Figur 2 sind die Kondensatorkörper 1, 2 auf derselben Seite eines Kathodenkontakts 3 befestigt. Dabei bilden die Kondensatorkörper 1, 2 einen Stapel von jeweils mit ihren breiten Seitenflächen übereinander und auch über dem Kathodenkontakt 3 liegenden Kondensatorkörpern 1, 2.

Die Kondensatorkörper 1, 2 sind durch elektrisch leitfähigen Kleber, beispielsweise Leitsilber, aneinander befestigt. Der Stapel aus Kondensatorkörpern 1, 2 wiederum ist durch Leitkleber am Kathodenkontakt 3 befestigt. Die aus dem Innern der Kondensatorkörper 1, 2 herausragenden Anodenkontakte 21, 22 sind seitlich gegeneinander versetzt, so daß jeder für sich in eine V-förmige Vertiefung 41, 42 eingreifen kann, die in der geeigneten Höhe am Abschnitt 7 des Bleches 6 angeordnet ist. Der Abschnitt 7 des Bleches 6 bildet ebenso wie in Figur 1 den Anodenanschluß 5 des herzustellenden Chipkondensators.

Die Kondensatorkörper 1, 2 können beispielsweise an sich bekannte Sinterkörper aus Tantalpulver sein, bei denen mittels der bekannten Methoden ein Elektrolytkondensator mit einer außenliegenden Kathodenelektrode hergestellt wird. Beispielsweise wird dabei als Anodenkontakt ein Tantaldraht verwendet. Dieser wir von Tantalpulver umpresst, gesintert und anschließend durch Oxidation mit einem Dielektrikum versehen. Die Kathodenschicht besteht aus Mangandioxid, welches in einem Pyrolyseprozess aus Mangannitrat erzeugt wird. Weitere Schichten aus Graphit und Silberlack dienen als Kontaktschichten.

Es kommen jedoch auch Kondensatorkörper in Betracht, die anstelle von Tantal Niob bzw. anstelle von Mangandioxid Polymer enthalten.

Figur 3 zeigt einen weiteren Kondensator während der Herstellung, wobei zu beiden Seiten eines Kathodenkontakts 3 jeweils zwei Kondensatorkörper 1, 8 sowie 2, 9 befestigt sind. Ein Abschnitt 7 des Bleches 6 ist dabei mit insgesamt vier V-förmigen Vertiefungen 41, 42, 48, 49 versehen, die jeweils in einer speziell für einen Kondensatorkörper 1, 2, 8, 9 geeigneten Höhe angeordnet sind. Die Kondensatorkörper 1, 2, 8, 9 sind mit Anodenkontakten 21, 22, 28, 29 versehen, die in die entsprechende Vertiefung 41, 42, 48, 49 eingreifen.

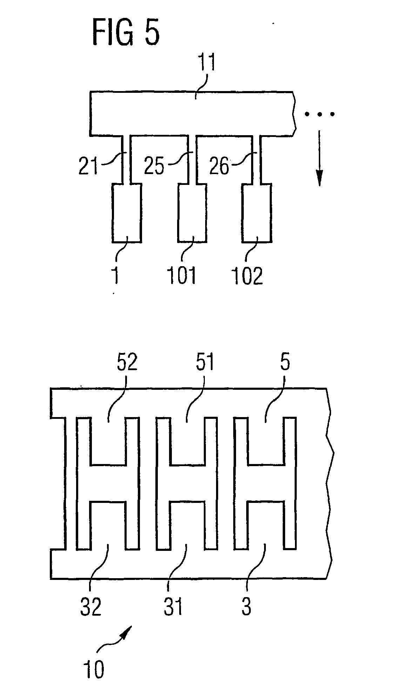

Figur 4 zeigt einen Kathodenkontakt 3 sowie ein Blech 6 mit einem Abschnitt 7, der den Anodenanschluß eines Chipkondensators bildet, als Bestandteil eines Systemträgers. Ein solcher Systemträger ist schematisch in Figur 5 dargestellt. An einer Seite des Systemträgers ist der Kathodenkontakt 3 als flaches Blech befestigt. Auf der gegenüberliegenden Seite des Kathodenkontakts 3 ist ein Blech 6 befestigt, welches einen Abschnitt 7 aufweist. Der Abschnitt 7 des Blechs kann durch Schneiden mit zwei in entgegengesetzte Richtungen zeigenden V-förmigen Vertiefungen 41, 42 versehen werden. Um den Abschnitt 7 in eine Position zu bringen, in der er zur Aufnahme von Anodenkontakten 21, 22 von Kondensatorkörpern eines Chipkondensators geeignet ist, muß lediglich der Abschnitt 7 des Bleches 6 entlang der Biegelinie 12 um 90° abgebogen werden. Dadurch klappt die V-förmige Vertiefung 41 nach oben aus der Blechebene heraus und die V-förmige Vertiefung 42 klappt nach unten ebenfalls aus der Ebene des Bleches 6 heraus, wodurch der in Figur 1 dargestellte Anodenanschluß 5 realisiert werden kann.

Figur 5 zeigt das Verfahren zur Herstellung eines Chipkondensators. Es wird ein Systemträger 10 bereitgestellt, mit Kathodenkontakten 3, 31, 32. Auf der gegenüberliegenden Seite der Kathodenkontakte 3, 31, 32 sind Anodenanschlüsse 5, 51, 52 vorgesehen. Die Darstellung in Figur 5 ist lediglich schematisch, bezüglich der genauen Ausgestaltung des Systemträgers 10 beziehungsweise der Kathodenkontakte 3, 31, 32 und der Anodenanschlüsse 5, 51, 52 wird auf Figur 4 verwiesen.

Es werden auch mindestens zwei Kondensatorträger 11 bereitgestellt, an denen kammartig eine Vielzahl von Anodenkontakten 21, 25, 26 befestigt sind, die ihrerseits wiederum Kondensatorkörper 1, 101, 102 tragen. Der Systemträger 10 und ein Kondensatorträger 11 werden wie durch den Pfeil angedeutet übereinandergelegt und anschließend werden die Kondensatorkörper 1, 101, 102 mit Kathodenkontakten 3, 31, 32 durch Befestigen miteinander verbunden. Diese Befestigung kann beispielsweise mittels Leitkleber erfolgen. Ebenfalls werden die Anodenkontakte 21, 25, 26 mit den bereits geeignet gebogenen Anodenanschlüssen 5, 51, 52 verbunden. Diese Verbindung erfolgt beispielsweise durch Laserschweißen, wobei gleichzeitig die Anodenkontakte 21, 25, 26 vom Kondensatorträger 11 getrennt werden können, womit gleichzeitig der erste Schritt zum Vereinzeln der Chipkondensatoren realisiert wird.

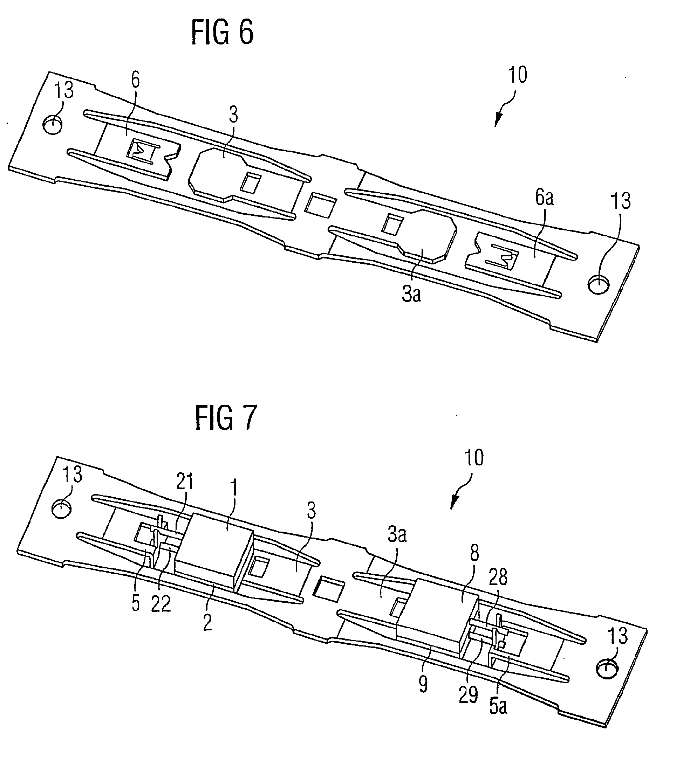

Figur 6 zeigt einen Systemträger 10, bei dem Paare von gegenüberliegenden Blechen 6 und Kathodenkontakten 3 sowie Paare von gegenüberliegenden Blechen 6a und Kathodenkontakten 3a nebeneinander angeordnet sind. Somit wird ein zweireihiger Systemträger 10 gebildet, bei dem die Ausbeute an Chipkondensatoren nochmals erhöht werden kann, da gleichzeitig zwei Kondensatorträger, kommend von gegenüberliegenden Seiten des Systemträgers 10 auf diesem aufmontiert werden können. Der Systemträger 10 ist am Rand mit Transportlöchern 13 versehen.

Figur 7 zeigt den Systemträger aus Figur 6 in bestücktem Zustand. Auf der linken Hälfte des Systemträgers 10 sind die Kondensatorkörper 1 und 2 oberhalb bzw. unterhalb des Kathodenkontakts 3 montiert und mit dem Anodenanschluß 5 verbunden. Auf der rechten Hälfte sind die Kondensatorkörper 8 und 9 auf der Oberseite bzw. Unterseite des Kathodenkontakts 3a montiert und mit dem Anodenanschluß 5a verbunden. Die Anodenkontakte 21 und 22 zeigen in die entgegengesetzte Richtung der Anodenkontakte 28, 29, was zeigt, daß zwei Kondensatorträger gleichzeitig von rechts und von links auf den Systemträger 10 aufmontiert werden können. Dies wird erreicht, indem die beiden Kathodenkontakte 3, 3a im inneren Bereich und die Anodenanschlüsse 5, 5a im äußeren Bereich des Systemträgerbandes 10 angeordnet sind, wodurch bezüglich einer Längsrichtung des Systemträgers 10 eine spiegelbildliche Anordnung verwirklicht wird.

Es wird darauf hingewiesen, daß die Verfahrensschritte bezüglich des Befestigens der Kondensatorkörper auf den Kathodenkontakten beziehungsweise der Anodenanschlüsse in beliebiger Reihenfolge durchgeführt werden können.

### Bezugszeichenliste

- 1, 2, 8, 9, 101, 102: Kondensatorkörper
- 21, 22, 28, 29, 25, 26: Anodenkontakt
- 3, 31, 32, 3a: Kathodenkontakt
- 41, 42, 48, 49: Vertiefungen
- 5, 51, 52, 5a: Anodenanschluß
- 6, 6a: Blech
- 7: Abschnitt
- 10: Systemträger
- 11: Kondensatorträger
- 12: Biegelinie
- 13: Transportloch

## Patentansprüche

1. Chipkondensator
- mit wenigstens zwei Kondensatorkörpern (1, 2),
- die jeweils mit einem Anodenkontakt (21, 22) versehen sind, der aus dem Kondensatorkörper (1, 2) herausragt,
- und mit einem Kathodenkontakt (3),
- bei dem die Kondensatorkörper (1, 2) übereinandergestapelt und bei dem eine breite Seite wenigstens eines Kondensatorkörpers (1, 2) auf dem Kathodenkontakt (3) montiert ist.

2. Chipkondensator nach Anspruch 1,
bei dem ein Kondensatorkörper (1) mittels Leitkleber mit dem Kathodenkontakt (3) verklebt ist.

3. Chipkondensator nach einem der Ansprüche 1 oder 2,
bei dem ein Kondensatorkörper (2) mittels Leitkleber mit einem weiteren Kondensatorkörper (1) verklebt ist.

4. Chipkondensator nach einem der Ansprüche 1 bis 3,
bei dem die Anodenkontakte (21, 22) in Vertiefungen (41, 42) eines Anodenanschlusses (5) angeordnet sind.

5. Chipkondensator nach Anspruch 4,
bei dem die Vertiefungen (41, 42) zu der dem Kathodenkontakt (3) gegenüberliegenden Seite des jeweiligen Kondensatorkörpers (21, 22) hin offen sind.

6. Chipkondensator nach einem der Ansprüche 4 bis 5,
bei dem die Vertiefungen (41, 42) V-förmig aus einem Abschnitt (7) eines Blechs (6) herausgeschnitten sind, der senkrecht aus der Ebene des Blechs (6) herausgebogen ist, welche parallel zum Kathodenkontakt (3) verläuft.

7. Chipkondensator nach einem der Ansprüche 1 bis 6,
bei dem die Kondensatorkörper (1, 2) auf verschiedenen Seiten des Kathodenkontakts (3) befestigt sind.

8. Chipkondensator nach einem der Ansprüche 1 bis 6,
bei dem Kondensatorkörper (1, 2) auf derselben Seite des Kathodenkontakts (3) befestigt sind.

9. Chipkondensator nach einem der Ansprüche 1 bis 8,
bei dem Anodenkontakte (21, 28; 24, 29) seitlich zueinander versetzt angeordnet sind.

10. Chipkondensator nach einem der Ansprüche 4 bis 9,
bei dem die Anodenkontakte (21, 22, 28, 29) in den Vertiefungen (41, 42, 48, 49) mittels Laserschweißen befestigt sind.

11. Verfahren zur Herstellung eines Chipkondensators mit folgenden Schritten:
a) Bereitstellen eines Systemträgers (10) mit aneinandergereihten Kathodenkontakten (3, 31, 32), denen jeweils ein Anodenanschluß (5, 51, 52) gegenüberliegt,
sowie einer Vielzahl von Kondensatorträgern (11), an denen jeweils eine Vielzahl von Kondensatorkörpern (1, 101, 102) kammartig mittels aus jedem Kondensatorkörper (1, 101, 102) herausragenden Anodenkontakten (21, 25, 26) befestigt sind
b) Übereinanderlegen von Systemträger (10) und einem ersten Kondensatorträger (11) und Befestigen von Kondensatorkörpern (1, 101, 102) an Kathodenkontakten (3, 31, 32) und Befestigen von Anodenkontakten (21, 25, 26) an Anodenanschlüssen (5, 51, 52),
c) Übereinanderlegen von Systemträger (10) und eines weiteren Kondensatorträgers (11) und Befestigen von Kondensatorkörpern (1, 101, 102) an Zusammenbauten aus Kondensatorkörper (1, 101, 102) und Kathodenkontakt (3, 31, 32) sowie Befestigen von Anodenkontakten (21, 25, 26) an Anodenanschlüssen (5, 51, 52).

12. Verfahren nach Anspruch 11,
wobei die Befestigung von Kondensatorkörpern (1, 101, 102) des ersten und weiteren Kondensatorträgers (11) zu beiden Seiten eines Kathodenkontakts (3, 31, 32) erfolgt.

13. Verfahren nach Anspruch 11,
wobei die Befestigung von Kondensatorkörpern (1, 101, 102) des weiteren Kontaktträgers (11) auf Kondensatorkörpern (1, 101, 102) des ersten Kondensatorträgers (11) erfolgt.

14. Verfahren nach einem der Ansprüche 11 bis 13,
wobei die Befestigung der Kondensatorkörper (1, 101, 102) auf Kathodenkontakten (3, 31, 32) mittels eines Leitklebers erfolgt.

15. Verfahren nach einem der Ansprüche 11 bis 14,
wobei die Befestigung der Anodenkontakte (21, 25, 26) an Anodenanschlüssen (5, 51, 52) mittels Laserschweißen unter gleichzeitiger Trennung des Anodenkontakts (21, 25, 26) vom Kondensatorträger (11) erfolgt.

## Claims

1. Chip capacitor
- having at least two capacitor bodies (1, 2),
- which are in each case provided with an anode contact (21, 22) projecting from the capacitor body (1, 2),
- and having a cathode contact (3),
- in which the capacitor bodies (1, 2) are stacked one above another, and in which a broad side of at least one capacitor body (1, 2) is mounted on the cathode contact (3).

2. Chip capacitor according to Claim 1,
in which a capacitor body (1) is adhesively bonded to the cathode contact (3) by means of conductive adhesive.

3. Chip capacitor according to either of Claims 1 and 2,
in which a capacitor body (2) is adhesively bonded to a further capacitor body (1) by means of conductive adhesive.

4. Chip capacitor according to one of Claims 1 to 3,
in which the anode contacts (21, 22) are arranged in depressions (41, 42) of an anode connection (5).

5. Chip capacitor according to Claim 4,
in which the depressions (41, 42) are open towards that side of the respective capacitor body (21, 22) which is opposite to the cathode contact (3).

6. Chip capacitor according to one of Claims 4 to 5,
in which the depressions (41, 42) are cut out in V-shaped fashion from a portion (7) of a metal sheet (6) which is bent out perpendicular from the plane of the metal sheet (6) which runs parallel to the cathode contact (3).

7. Chip capacitor according to one of Claims 1 to 6,
in which the capacitor bodies (1, 2) are fixed on different sides of the cathode contact (3).

8. Chip capacitor according to one of Claims 1 to 6,
in which the capacitor bodies (1, 2) are fixed on the same side of the cathode contact (3).

9. Chip capacitor according to one of Claims 1 to 8,
in which anode contacts (21, 28; 24, 29) are arranged in a manner laterally offset with respect to one another.

10. Chip capacitor according to one of Claims 4 to 9,
in which the anode contacts (21, 22, 28, 29) are fixed in the depressions (41, 42, 48, 49) by means of laser welding.

11. Method for producing a chip capacitor having the following steps of:
a) providing a leadframe (10) having cathode contacts (3, 31, 32) which are strung together and opposite each of which an anode connection (5, 51, 52) is situated,
and also a multiplicity of capacitor carriers (11) at each of which a multiplicity of capacitor bodies (1, 101, 102) are fixed in comblike fashion by means of anode contacts (21, 25, 26) projecting from each capacitor body (1, 101, 102),
b) placing leadframe (10) and a first capacitor carrier (11) one above another and fixing capacitor bodies (1, 101, 102) at cathode contacts (3, 31, 32) and fixing anode contacts (21, 25, 26) at anode connections (5, 51, 52),
c) placing leadframe (10) und a further capacitor carrier (11) one above another and fixing capacitor bodies (1, 101, 102) at assemblies comprising capacitor body (1, 101, 102) and cathode contact (3, 31, 32) and fixing anode contacts (21, 25, 26) at anode connections (5, 51, 52).

12. Method according to Claim 11,
capacitor bodies (1, 101, 102) of the first and further capacitor carriers (11) being fixed on both sides of a cathode contact (3, 31, 32).

13. Method according to Claim 11,
capacitor bodies (1, 101, 102) of the further contact carrier (11) being fixed on capacitor bodies (1, 101, 102) of the first capacitor carrier (11).

14. Method according to one of Claims 11 to 13,
the capacitor bodies (1, 101, 102) being fixed on cathode contacts (3, 31, 32) by means of a conductive adhesive.

15. Method according to one of Claims 11 to 14,
the anode contacts (21, 25, 26) being fixed at anode connections (5, 51, 52) by means of laser welding with the anode contact (21, 25, 26) being simultaneously separated from the capacitor carrier (11).

## Revendications

1. Condensateur à puce
- comprenant au moins deux pièces (1, 2) de condensateur ;
- qui sont munies, respectivement, d'un contact (21, 22) d'anode sortant de la pièce (1, 2) de condensateur ;
- et comprenant un contact (3) de cathode ;
- dans lequel les pièces (1, 2) de condensateur sont empilées les unes sur les autres et dans lequel un grand côté d'au moins une pièce (1, 2) de condensateur est monté sur le contact (3) de cathode.

2. Condensateur à puce suivant la revendication 1,
dans lequel une pièce (1) de condensateur est collée au moyen de colle conductrice au contact (3) de cathode.

3. Condensateur à puce suivant l'une des revendications 1 ou 2,
dans lequel une pièce (2) de condensateur est collé au moyen de colle conductrice à une autre pièce (1) de condensateur.

4. Condensateur à puce suivant l'une des revendications 1 à 3,
dans lequel les contacts (21, 22) d'anode sont disposés dans des cavités (41, 42) d'une borne (5) d'anode.

5. Condensateur à puce suivant la revendication 4,
dans lequel les cavités (41, 42) sont ouvertes du côté de la pièce (21, 22) de condensateur respective, qui est opposé au contact (3) de cathode.

6. Condensateur à puce suivant l'une des revendications 4 à 5,
dans lequel les cavités (41, 42) sont découpées en forme de V dans un plan (7) d'une tôle (6), le flan étant coudé hors du plan de la tôle (6) qui est parallèle au contact (3) de cathode.

7. Condensateur à puce suivant l'une des revendications 1 à 6,
dans lequel les pièces (1, 2) de condensateur sont fixées à des côtés différents du contact (3) de cathode.

8. Condensateur à puce suivant l'une des revendications 1 à 6,
dans lequel des pièces (1, 2) de condensateur sont fixées du même côté du contact (3) de cathode.

9. Condensateur à puce suivant l'une des revendications 1 à 8,
dans lequel des contacts (21, 28 ; 24, 29) d'anode sont disposés de manière décalée latéralement les uns par rapport aux autres.

10. Condensateur à puce suivant l'une des revendications 4 à 9,
dans lequel les contacts (21, 22, 28, 29) d'anode sont fixés dans les cavités (41, 42, 48, 49) au moyen d'un soudage laser.

11. Procédé de production d'un condensateur à puce comprenant les stades dans lesquels :
a) on se procure un support (10) de système ayant des contacts (3, 31, 32) de cathode qui sont rangés les uns à côté des autres et auxquels est opposée, respectivement, une borne (5, 51, 52) d'anode ;
ainsi qu'une pluralité de supports (11) de condensateur auxquels sont fixées, respectivement, une pluralité de pièces (1, 101, 102) de condensateur à la manière d'un peigne au moyen de contacts (21, 25, 26) d'anode sortant de chaque pièce (1, 101, 102) de condensateur ;
b) on superpose des supports (10) de système et un premier support (11) de condensateur et on fixe des pièces (1, 101, 102) de condensateur à des contacts (3, 31, 32) de cathode et on fixe des contacts (21, 25, 26) d'anode à des bornes (5, 51, 52) d'anode ;
c) on superpose des supports (10) de système et un autre support (11) de condensateur et on fixe des pièces (1, 101, 102) de condensateur à des assemblages de pièces (1, 101, 102) de condensateur et de contacts (3, 31, 32) de cathode et l'on fixe des contacts (21, 25, 26) d'anode à des bornes (5, 51, 52) d'anode.

12. Procédé suivant la revendication 11,
dans lequel on effectue la fixation de pièces (1, 101, 102) de condensateur du premier et de l'autre support (11) de condensateur des deux côtés d'un contact (3, 31, 32) de cathode.

13. Procédé suivant la revendication 11,
dans lequel on effectue la fixation de pièces (1, 101, 102) de condensateur de l'autre support (11) de contact sur des pièces (1, 101, 102) de condensateur du premier support (11) de condensateur.

14. Procédé suivant l'une des revendications 11 à 13,
dans lequel on effectue la fixation des pièces (1, 101, 102) de condensateur sur des contacts (3, 31, 32) de cathode au moyen d'une colle conductrice.

15. Procédé suivant l'une des revendications 11 à 14,
dans lequel on effectue la fixation des contacts (21, 25, 26) d'anode à des bornes (5, 51, 52) d'anode au moyen d'un soudage laser en séparant simultanément le contact (21, 25, 26) d'anode du support (11) de condensateur.
